# EUROPÄISCHE PATENTSCHRIFT

(11) **EP 2 724 134 B1**
(45) Veröffentlichungstag und Bekanntmachung des Hinweises auf die Patenterteilung: **28.03.2018**
(21) Anmeldenummer: 12718966.0
(22) Anmeldetag: 27.04.2012
(51) Int. Cl.: G01L 19/14

(54) **SENSOR ZUR ERFASSUNG MINDESTENS EINER EIGENSCHAFT EINES FLUIDEN MEDIUMS**
SENSOR FOR DETECTING AT LEAST ONE PROPERTY OF A FLUID MEDIUM
DÉTECTEUR DESTINÉ À LA DÉTECTION D'AU MOINS UNE PROPRIÉTÉ D'UN MILIEU FLUIDE

(30) Priorität: 24.06.2011 DE 102011078048
(43) Veröffentlichungstag der Anmeldung: 30.04.2014
(73) Patentinhaber: Robert Bosch GmbH, 70442 Stuttgart (DE)
(72) Erfinder: PANHOELZL, Bernhard, 71384 Weinstadt (DE); FLAVIGNIE, Romuald, 71701 Schwieberdingen (DE); ROESSER, Christian, 71723 Grossbottwar (DE); WOLFF, Janpeter, 75449 Wurmberg (DE); RUETH, Falk, 70771 Leinfelden-Echterdingen (DE)
(86) Internationale Anmeldenummer: PCT/EP2012/057755
(87) Internationale Veröffentlichungsnummer: WO 2012/175244

(56) Entgegenhaltungen:
- DE-A1-102009 054 689
- US-A- 6 092 426

## Beschreibung

### Stand der Technik

In verschiedenen Bereichen der Technik müssen eine oder mehrere Eigenschaften fluider Medien erfasst werden. Hierbei kann es sich grundsätzlich um beliebige physikalische und/oder chemische Eigenschaften der fluiden Medien, also der Gase und/oder Flüssigkeiten handeln, wie beispielsweise Temperatur, Druck, Strömungseigenschaften oder Ähnliches. Ein wichtiges Beispiel, auf welches die vorliegende Erfindung jedoch nicht beschränkt ist, ist die Erfassung eines Drucks des fluiden Mediums. Drucksensoren sind beispielsweise aus Konrad Reif (Hrsg.): Sensoren im Kraftfahrzeug, 1. Auflage 2010, Seiten 134-136 bekannt. Ein wichtiges Anwendungsbeispiel, auf welches die vorliegende Erfindung jedoch ebenfalls nicht beschränkt ist, sind so genannte Raildrucksensoren (RDS), welche im Verteilerrohr (Rail) von Hochdruckspeichereinspritzsystemen (Common-Rail-Systemen) den Kraftstoffdruck messen. Hierzu werden Raildrucksensoren in der Regel axial oder radial in das Verteilerrohr eingeschraubt.

Üblicherweise weisen derartige Drucksensoren unter anderem einen Sensorkörper und ein Sensorelement mit einer Innenbohrung und einer als Messbrücke ausgebildeten Sensormembran auf. Bei der Herstellung von solchen Drucksensoren, insbesondere Raildrucksensoren, wird üblicherweise das Sensorelement mit der Messbrücke auf den als Gewindestück ausgeführten Sensorkörper aufgeschweißt, um diese Bauteile dauerhaft miteinander zu verbinden. Damit während des Schweißvorgangs die Schmelze nicht in die Innenbohrung des empfindlichen Sensorelements eindringen kann, wird üblicherweise eine Schweißbadsicherung am Gewindestück vorgesehen. Trotz der durch diese bekannten Vorrichtungen bewirkten Verbesserungen besteht nach wie vor ein Optimierungspotenzial bekannter Sensoren, insbesondere bekannter Drucksensoren.

### Offenbarung der Erfindung

Die Erfindung beruht auf der Erkenntnis, dass durch den Verbindungsschritt des genannten Herstellungsverfahrens, d.h. den Schweißprozess, eine Kerbe an der Schweißnaht entsteht. Durch die Kerbwirkung wird die Spannung an der Schweißnaht erhöht. Zusätzlich zu der Kerbwirkung kommt, dass durch die für den Schweißprozess notwendige Schweißbadsicherung ein Steifigkeitssprung zwischen Sensorkörper und Sensorelement vorherrscht, der zusätzliche Schubspannungen auf die Schweißnaht aufprägt. Diese sind durch unterschiedliche Ausdehnungseigenschaften des Sensorelementes und des Sensorkörpers bedingt. Diese Spannungen wirken sich auf die Festigkeit der Verbindung zwischen dem Sensorkörper und dem Sensorelement negativ aus, d.h. je größer die auftretenden Spannungen sind desto geringer ist die Festigkeit bzw. Stabilität der Schweißverbindung zwischen diesen Bauteilen. Damit kann die bisherige Art der Verbindung der Anwendung der Drucksensoren bei zukünftig zu erwartenden höheren Drücken entgegenstehen. Ferner können sich solche Spannungen im Bereich der Schweißnaht auch auf das Sensorsignal negativ auswirken und dort beispielsweise einen Offset verursachen oder die Genauigkeit beeinflussen.

Es wird dementsprechend ein Sensor zur Erfassung mindestens einer Eigenschaft eines fluiden Mediums, also eines Gases und/oder einer Flüssigkeit und ein Herstellungsverfahren eines solchen Sensors vorgeschlagen, welcher die Nachteile bekannter Sensoren zumindest weitgehend vermeidet. Bei der mindestens einen Eigenschaft kann es sich grundsätzlich um eine beliebige physikalische und/oder chemische Eigenschaft des fluiden Mediums handeln, insbesondere einen Druck. Auch eine Kombination der Erfassung mehrerer Eigenschaften ist möglich.

Das Verfahren zum Herstellen eines Sensors zum Erfassen mindestens einer Eigenschaft eines fluiden Mediums, insbesondere eines Drucks, umfasst die folgenden Schritte, bevorzugt in der angegebenen Reihenfolge:
- Bereitstellen eines Sensorkörpers, wobei der Sensorkörper zum Einbringen in eine Wand eines Messraums eingerichtet ist,
- Bereitstellen eines Sensorelements,
- Verschweißen des Sensorelements mit dem Sensorkörper,
wobei an dem Sensorelement eine Schweißbadsicherung vorgesehen wird.

Die genannten Schritte können in der dargestellten Reihenfolge durchgeführt werden. Es ist jedoch grundsätzlich auch eine andere Reihenfolge möglich, und es können ein oder mehrere der genannten Schritte auch zeitgleich oder zeitlich überlappend durchgeführt werden.

Das Sensorelement kann eine Stirnseite aufweisen, die dem Sensorkörper zugewandt ist, und die Schweißbadsicherung kann als von der Stirnseite vorstehender Vorsprung ausgebildet sein. Der Sensorkörper kann eine dem Vorsprung entsprechende Vertiefung aufweisen. Der Vorsprung kann kegelförmig, als abgesetzter Kegel oder mit zylindrischen Stufen ausgebildet sein. Die Schweißbadsicherung kann an dem Sensorelement derart ausgebildet sein, dass sich vor und nach dem Verschweißen mit dem Sensorkörper zwischen dem Sensorelement und dem Sensorkörper ein Spalt befindet. Das Sensorelement und der Sensorkörper können derart angeordnet werden, dass sie eine gemeinsame Achse aufweisen, und die Schweißbadsicherung kann derart ausgebildet sein, dass sich nach dem Verschweißen mit dem Sensorkörper zwischen dem Sensorelement und dem Sensorkörper der Spalt in einem radial inneren Bereich um die Achse befindet. Der Sensorkörper kann einen Zuführkanal für das fluide Medium aufweisen, der sich entlang einer gemeinsamen Achse des Sensorkörpers und des Sensorelements erstreckt, wobei das Sensorelement eine Messbrücke aufweist, die zum Abschließen des Zuführkanals eingerichtet ist. Das Verschweißen kann in einer Umfangsrichtung um das Sensorelement und den Sensorkörper erfolgen. Das Sensorelement und der Sensorkörper können im Wesentlichen zylindrisch ausgebildet sein und die Schweißbadsicherung kann derart ausgebildet sein, dass sie vollständig in dem Sensorkörper angeordnet wird.

Ein derart herstellbarer Sensor zum Erfassen mindestens einer Eigenschaft eines fluiden Mediums, insbesondere eines Drucks, kann somit aus einem Sensorkörper und aus mindestens einem Sensorelement gebildet werden. Der Sensorkörper ist vorzugsweise eingerichtet, um in eine Wand eines Messraums eingebracht zu werden. Der Sensorkörper kann dabei selbst mindestens ein Verbindungselement zur Verbindung mit der Wand des Messraums aufweisen. Bei der Wand des Messraums kann es sich beispielsweise um eine Wand eines Verteilerrohrs (Common-Rail) eines Hochdruckspeichereinspritzsystems (Common-Rail-System) handeln. Auch andere Anbindungen sind jedoch grundsätzlich möglich. Das Verbindungselement kann eingerichtet sein, um eine kraftschlüssige und/oder formschlüssige Verbindung mit der Wand einzugehen. Beispielsweise kann das Verbindungselement mindestens ein Gewinde umfassen, vorzugsweise ein Gewinde zur Herstellung einer druckdichten Verbindung.

Das mindestens eine Sensorelement kann zur Erfassung der Eigenschaft des fluiden Mediums eingerichtet sein. Während der Sensorkörper überwiegend zur Bereitstellung der mechanischen Stabilität des Sensors im Bereich des Sensorelements und für die Verbindung des Sensors mit der Wand des Messraums sorgen kann, ist unter einem Sensorelement ein Element zu verstehen, welches die eigentlichen Messsignale und/oder Messwerte liefert, die zur Erfassung der mindestens einen Eigenschaft des fluiden Mediums genutzt werden. Beispielsweise kann es sich hierbei um elektrische Messsignale handeln. Dieses Sensorelement, welches auch mehrteilig ausgebildet sein kann, kann ganz oder teilweise mit dem Sensorkörper verbunden werden. Beispielsweise kann das Sensorelement einen Drucksensor umfassen oder als Drucksensor ausgestaltet sein. Insbesondere kann der Drucksensor eine als Messbrücke ausgebildete Sensormembran mit einem oder mehreren piezoresistiven Elementen und/oder anderen Arten von sensitiven Elementen umfassen, wie dies bei integrierten Drucksensoren üblich ist. Für weitere mögliche Ausgestaltungen von Drucksensoren kann auf den oben beschriebenen Stand der Technik, insbesondere auf Konrad Reif (Hrsg.): Sensoren im Kraftfahrzeug, 1. Auflage 2010, Seiten 134-136, und die Dokumente DE102009054689 und US6092426 verwiesen werden. Auch andere Ausgestaltungen sind jedoch grundsätzlich möglich.
Die Verbindung des Sensorelements mit dem Sensorkörper erfolgt durch Verschweißen. Unter einem Verschweißen ist im Rahmen der vorliegenden Erfindung das unlösbare Verbinden von Bauteilen unter Anwendung von Wärme oder Druck, mit oder ohne Schweißzusatzwerkstoffe, zu verstehen. Dabei können die zu verbindenden Werkstoffe bis zu deren Verflüssigung erhitzt werden und sich vermischen, so dass sie nach dem Erstarren fest miteinander verbunden sind.
Wie oben bereits ausgeführt ist an dem Sensorelement eine Schweißbadsicherung vorgesehen. Im Rahmen der vorliegenden Erfindung ist unter einer Schweißbadsicherung jede bauliche oder konstruktive Maßnahme oder Ausbildung an dem Sensorelement zu verstehen, die eingerichtet ist, ein Durchfallen der Schweißnaht und/oder ein Abfließen der beim Schweißen entstehenden Schmelze in eine Innenbohrung des Sensorelements und/oder des Sensorkörpers zu verhindern. Die Schweißbadsicherungen können verschiedene Formen haben und es kann dadurch auch das Wurzelaussehen beeinflusst werden. Unter der Wurzel ist im Rahmen der Erfindung der sich beim Schweißen auf der Rückseite der Schweißnaht bildende Bereich zu verstehen. Die Wurzel entsteht beim Durchschweißen und weist üblicherweise aus eine Form einer Wulst auf. Insbesondere sind unter einer Schweißbadsicherung im Rahmen der vorliegenden Erfindung entsprechende Formen oder Ausbildungen von Abschnitten oder Bereichen des Sensorelements zu verstehen, die zum räumlichen Begrenzen der Ausbreitung der beim Schweißen entstehenden Schmelze eingerichtet sind. Unter dem Begriff Schweißbadsicherung sollen aber auch von dem Sensorelement separate oder getrennte Bauteile zu verstehen sein, sofern sie nach dem Schweißen nicht derart dauerhaft in der Innenbohrung des Sensorelements und/oder des Sensorkörpers verbleiben, dass sie den Querschnitt der Innenbohrung verengen.

Die Schweißbadsicherung kann als Vorsprung von dem Sensorelement ausgebildet sein, der zum Verbinden des Sensorelements mit dem Sensorkörper in eine dem Vorsprung entsprechende Vertiefung in dem Sensorkörper eingesetzt wird. Unter einer entsprechenden Form ist im Rahmen der vorliegenden Erfindung eine komplementäre Form oder Ausbildung derart zu verstehen, dass es ähnlich einem Abdruck eine positive Form, wie beispielsweise den Vorsprung, und eine negative Form als negatives Abbild der positiven Form, wie beispielsweise die Vertiefung, gibt. Daher entsprechen sich die Formen im Rahmen üblicher Passungs- oder Bemaßungsungenauigkeiten.

In dem Sensorkörper kann mindestens eine als Zuführkanal ausgebildete Innenbohrung zum Zuführen des fluiden Mediums zu dem Sensorelement ausgebildet sein. Beispielsweise kann dieser Zuführkanal eine runde oder eine polygonale Bohrung umfassen. Das fluide Medium kann dabei direkt zu dem Sensorelement zugeführt werden oder die zu erfassende Eigenschaft kann an ein Zwischenmedium übertragen werden. Insbesondere kann sich der Zuführkanal durch den Sensorkörper und das Sensorelement bis zu einer Messbrücke des Sensorelementes entlang einer gemeinsamen Achse des Sensorelementes und des Sensorkörpers erstrecken. Unter einer Erstreckung entlang einer Achse ist im Rahmen der vorliegenden Erfindung eine Erstreckung im Wesentlichen parallel zu der Achse mit einer Winkelabweichung von der Achse von nicht mehr als 15 Grad zu verstehen.

Das Sensorelement kann insbesondere, wie oben ausgeführt, mindestens ein mit dem Sensorkörper verbundenes Drucksensorelement umfassen. Die Verbindung mit dem Sensorkörper erfolgt dabei mittels Schweißen. Der Verbund aus Sensorkörper und Sensorelement kann so ausgebildet werden, dass er als Druckstutzen ausgeführt wird. Der Zuführkanal kann sensorelementseitig durch eine Messbrücke abgeschlossen werden, wie dies bei Drucksensoren häufig der Fall ist.

Der Sensorkörper kann vorzugsweise als Ganzes einstückig ausgebildet sein, also beispielsweise aus demselben Block eines Materials, beispielsweise eines metallischen Materials, beispielsweise Stahl, herausgearbeitet oder hergestellt sein. Das Verbindungselement kann insbesondere, wie oben ausgeführt, mindestens ein Gewinde umfassen, insbesondere ein druckdichtes Gewinde.

Wie oben bereits ausgeführt ist zwischen der Schweißbadsicherung an dem Sensorelement und der Vertiefung an dem Sensorkörper ein Spalt gebildet, der sowohl vor als auch nach dem Schweißen bestehen bleibt. Die Bildung des Spalts ist aus fertigungstechnischen Toleranzgründen gewollt, da sichergestellt werden muss, dass die Schweißbadsicherung in eine entsprechende Aufnahme des Sensorkörpers, wie beispielsweise eine Vertiefung, eingesetzt oder eingeführt werden kann. Die Bildung des Spalts kann erreicht werden, indem die Höhe der Schweißbadsicherung, d.h. die Länge der Erstreckung der Schweißbadsicherung von der Stirnseite des Sensorelements bis zu ihrer Spitze, kürzer ist als die Tiefe der Vertiefung des Sensorkörpers. Die Bildung eines Spalts zwischen der Schweißbadsicherung und der Vertiefung kann auch durch eine entsprechende Ausbildung eines Öffnungswinkels bei kegelförmigen oder abgesetzt kegelförmigen Ausbildungen erreicht werden. Sofern beispielsweise der Öffnungswinkel der kegelförmigen oder abgesetzt kegelförmigen Schweißbadsicherung größer als der Öffnungswinkel der kegelförmigen oder abgesetzt kegelförmigen Vertiefung ist, so kann das Sensorelement nicht vollständig in der Vertiefung des Sensorkörpers angeordnet werden. Dadurch berühren sich das Sensorelement und der Sensorkörper nur in einem radial äußeren Bereich der Schweißbadsicherung und der Vertiefung. Unter dem Öffnungswinkel ist im Rahmen der vorliegenden Erfindung gemäß den allgemeinen Definitionen der Geometrie das Doppelte des Winkels zwischen den Mantellinien und der Achse eines Drehkegels zu verstehen. Unabhängig von der Wahl der Methode zum Bilden des Spalts ist zu beachten, dass sich das Sensorelement und der Sensorkörper in einem äußeren Umfangsbereich, d.h. in einem Bereich, in dem mit dem Schweißen in Umfangsrichtung begonnen wird, dicht aufeinander liegen, da ansonsten das Sensorelement und der Sensorkörper keine Schweißverbindung eingehen können.
Ein Sensor gemäß einer oder mehrerer der oben beschriebenen Ausgestaltungen kann insbesondere, wie oben ausgeführt, als Drucksensor in Kraftstoffsystemen eingesetzt werden, beispielsweise als Raildrucksensor in Hochdruckspeichereinspritzsystemen. Auch andere Anwendungen sind jedoch grundsätzlich denkbar. Eine Grundidee der Erfindung ist, die Spannung in der Schweißnaht zu reduzieren, indem der Steifigkeitssprung zwischen Sensorelement und Gewindestück reduziert wird.

Durch die Erfindung können größere Wandstärken im Bereich der Schweißnaht realisiert werden, wodurch die Belastung reduziert wird. Dadurch kann ein so hergestellter Drucksensor für höhere Druckstufen eingesetzt werden, die für zukünftige Einspritzsysteme notwendig sind.

### Kurze Beschreibung der Zeichnungen

Ausführungsbeispiele der Erfindung sind in den Figuren dargestellt und werden nachfolgend näher beschrieben.

Es zeigen:
- Figur 1: eine Explosionsdarstellung eines bekannten Raildrucksensors,
- Figur 2A: einen Sensorkörper und ein Sensorelement in einer Schnittdarstellung mit angedeuteter Schweißverbindung,
- Figur 2B: eine vergrößerte Darstellung eines Ausschnitts der Figur 2A,
- Figur 3A: eine Schnittansicht einer ersten Ausführungsform der Erfindung,
- Figur 3B: einen vergrößerten Ausschnitt eines Aspekts der Figur 3A,
- Figur 4A: eine Schnittansicht einer zweiten Ausführungsform der Erfindung,
- Figur 4B: einen vergrößerten Ausschnitt eines Aspekts der Figur 4A,
- Figur 5A: eine Schnittansicht einer dritten Ausführungsform der Erfindung und
- Figur 5B: einen vergrößerten Ausschnitt eines Aspekts der Figur 5A.

### Ausführungsformen der Erfindung

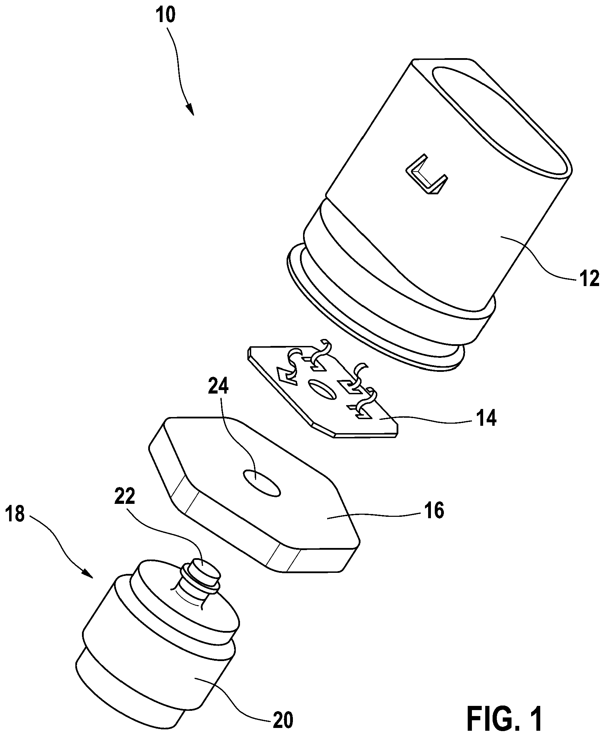

In Figur 1 ist ein Ausführungsbeispiel eines bekannten Sensors 10 zur Erfassung mindestens einer Eigenschaft eines fluiden Mediums gezeigt, welcher in diesem Fall als Drucksensor, speziell als Raildrucksensor, ausgebildet ist. Der Raildrucksensor 10 misst in einem nicht gezeigten Verteilerrohr (Rail) den Kraftstoffdruck. Dazu wird der Raildrucksensor 10 in das Rail oder eine Wand des Rails entweder axial oder radial eingeschraubt. Das in Figur 1 in Explosionsdarstellung gezeigte Ausführungsbeispiel eines Raildrucksensors 10 entspricht einem kommerziellen Raildrucksensor vom Typ 4.x der Robert Bosch GmbH, Deutschland.

Der Raildrucksensor 10 umfasst in dem dargestellten Ausführungsbeispiel optional ein Steckergehäuse 12 sowie einen oder mehrere Schaltungsträger 14, beispielsweise eine oder mehrere Leiterplatten. Weiterhin umfasst der Raildrucksensor 10 ein Gehäuseunterteil 16 sowie einen Druckstutzen 18 mit einem Sensorkörper 20 und einem Sensorelement 22. In dem dargestellten Ausführungsbeispiel ragt das Sensorelement 22 in eine zentrale Bohrung 24 in dem Gehäuseunterteil 16 hinein, was jedoch nicht notwendigerweise der Fall sein muss. Insbesondere ist der Sensorkörper 20 eingerichtet, in eine Wand eines Messraums, wie beispielsweise ein Rail oder eine Wand des Rails, entweder axial oder radial eingeschraubt zu werden.

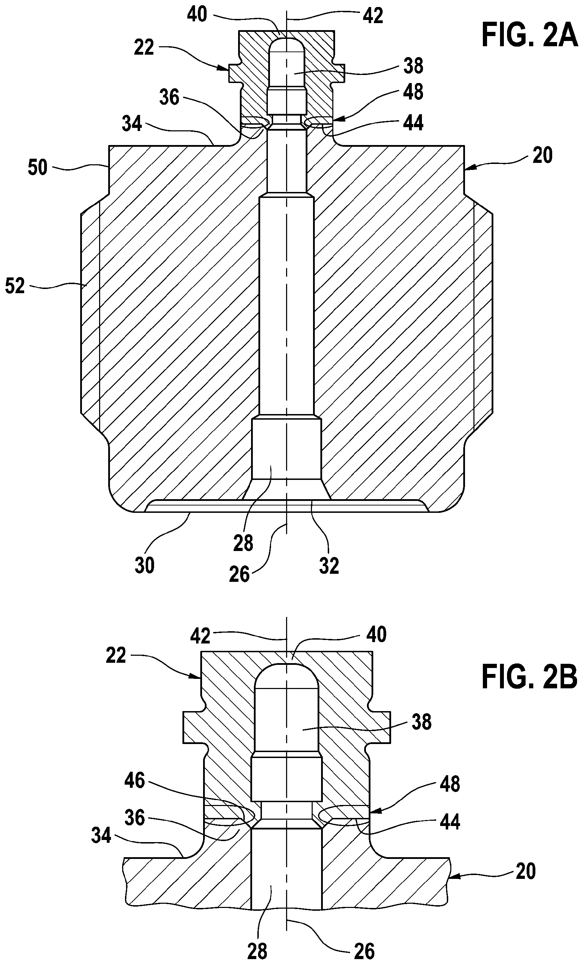

In den Figuren 2A und 2B sind eine Schnittansicht und ein vergrößerter Ausschnitt der Schnittansicht bekannter Ausgestaltungen des Druckstutzens 18 dargestellt, wie sie beispielsweise in dem Sensor 10 gemäß Figur 1 zum Einsatz kommen können. Dabei zeigt die Figur 2A den Sensorkörper 20 und das Sensorelement 22 bevor sie mittels Schweißen zu dem Druckstutzen 18 verbunden werden und die Figur 2B zeigt einen vergrößerten Ausschnitt desjenigen Bereichs der Schnittansicht der Figur 2A, in dem der Sensorkörper 20 und das Sensorelement 22 verbunden werden.

Der Sensorkörper 20 kann in diesem Beispiel ein zylindrisches Bauteil mit einer Zylinderachse 26 sein, wobei entlang der Zylinderachse 26 eine als Zuführkanal 28 ausgebildete Innenbohrung ausgebildet ist. Der Zuführkanal 28 erstreckt sich von einer dem fluiden Medium zuweisenden Beaufschlagungsseite 30, an welcher der Zuführkanal 28 eine Öffnung 32 aufweist, hin zu einer der Beaufschlagungsseite 30 entlang der Zylinderachse 26 gegenüberliegenden Stirnseite 34. An der Stirnseite 34 ist eine Schweißbadsicherung 36 als drehkegelförmiger Vorsprung oder Ansatz angeordnet, der von der Stirnseite 34 vorsteht. Die Zylinderachse 26 der drehkegelförmigen Schweißbadsicherung 36 überlappt mit der Achse 26 des Sensorkörpers 20 und der Zuführkanal 28 erstreckt sich auch durch die Schweißbadsicherung 36, wie am Besten in der Figur 2B zu erkennen ist.

Das eigentliche Sensorelement 22 umfasst in dem dargestellten Beispiel eine als Zuführkanal 38 ausgebildete Innenbohrung und eine Messbrücke 40, welche den Zuführkanal 38 abschließt. Auf der Messbrücke 40 können beispielsweise auf der dem Zuführkanal 38 abgewandten Seite ein oder mehrere sensitive Elemente aufgebracht sein, beispielsweise piezoresistive Elemente und/oder andere Arten von sensitiven Elementen. Insbesondere kann das Sensorelement 22 ein zylindrisches Bauteil sein, wobei sich der Zuführkanal 38 entlang der Zylinderachse 42 erstreckt. An der der Messbrücke 40 entlang der Zylinderachse 42 gegenüberliegenden Stirnseite 44 weist das Sensorelement 22 eine drehkegelförmige Vertiefung 46 auf, die zur Aufnahme der Schweißbadsicherung 36 des Sensorkörpers 20 dient. Zu diesem Zweck entspricht die Vertiefung 46 in ihren Abmessungen und ihrer Form derart der Schweißbadsicherung 36, dass sich die Mantelflächen der kegelförmigen Vertiefung 46 und der kegelförmigen Schweißbadsicherung 36 im aufgenommenen Zustand, abgesehen von fertigungstechnischen Toleranzen, vollständig berühren.

Zum Bilden des Druckstutzens 18 wird das Sensorelement 22 und der Sensorkörper 20 so angeordnet, dass die Schweißbadsicherung 36 in der Vertiefung 46 vollständig aufgenommen ist und sich die Mantelflächen der kegelförmigen Vertiefung 46 und der kegelförmigen Schweißbadsicherung 36 vollständig so berühren, dass kein Spalt zwischen der Schweißbadsicherung 36 und der Vertiefung 46 gebildet ist. Dabei überlappen sich die Zylinderachsen 26 und 42. Bei dem in Figur 2A dargestellten Beispiel wird das Sensorelement 22 mit der Messbrücke 40 auf den Sensorkörper 22 an der durch eine gebogene Linie markierten Bereich 48 mittels einer Schweißverbindung aufgeschweißt. Die Schweißverbindung wird dabei umlaufend um die Zylinderachsen 26 und 42 vorgesehen, d.h. die Schweißverbindung erstreckt sich vollständig in Umfangsrichtung um die Zylinderachsen 26 und 42 zwischen dem Sensorelement 22 und dem Sensorkörper 20. Die Schweißbadsicherung 36 verhindert, dass die beim Schweißen entstehende Schmelze in die Zuführkanäle 28 und 38 gelangen kann. Durch den Schweißprozess entsteht eine Kerbe an der Schweißverbindung. Durch die Kerbwirkung wird die Spannung an der Schweißverbindung erhöht. Zusätzlich zu der Kerbwirkung kommt, dass durch die für den Schweißprozess notwendige Schweißbadsicherung ein Steifigkeitssprung zwischen Sensorkörper 20 und Sensorelement 22 vorherrscht, der zusätzliche Schubspannungen auf die Schweißverbindung aufprägt, die aufgrund der unterschiedlichen Ausdehnungsverhalten des Sensorelements 22 und des Sensorkörpers 20 in radialer Richtung von den Zylinderachsen 26 und 42 ausgehend entstehen. Derartige Spannungen können sich negativ auf die Lebensdauer des Sensors 10 und die Messgenauigkeit des Sensorelements 22 auswirken.

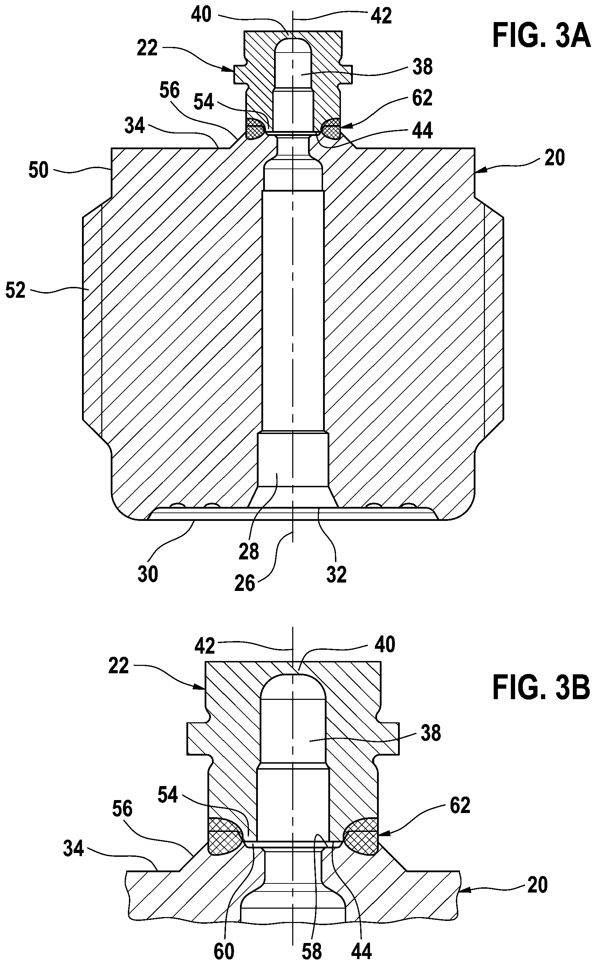

In den Figuren 3A und 3B ist eine erste Ausführungsform eines erfindungsgemäßen Sensors gezeigt, welche anstelle der bekannten Sensoren in den Figuren 1 bis 2B eingesetzt werden können. Nachstehend werden die Unterschiede zu den bekannten Sensoren beschrieben und gleiche Bauteile sind mit gleichen Bezugszeichen versehen. Insbesondere zeigt die Figur 3A den Sensorkörper 20 und das Sensorelement 22 in zu dem Druckstutzen 18 verbundenen zustand und die Figur 3B zeigt einen vergrößerten Ausschnitt desjenigen Bereichs der Schnittansicht der Figur 3A, in dem der Sensorkörper 20 und das Sensorelement 22 verbunden sind.

Der Sensorkörper 20 kann bei dieser Ausführungsform insbesondere als Gewindestück 50 ausgestaltet sein und kann ein oder mehrere Verbindungselemente 52 in Form eines oder mehrerer Gewinde umfassen. Das Sensorelement 22 weist an seiner der Messbrücke 40 entlang der Zylinderachse 42 gegenüberliegenden Stirnseite 44 eine Schweißbadsicherung 54 auf. Die Schweißbadsicherung 54 ist mit dem Sensorelement 22 einstückig und/oder monolithisch ausgebildet. Die Schweißbadsicherung 54 ist als Vorsprung in Form eines abgesetzten Drehkegels ausgebildet. Der Sensorkörper 20 weist an seiner Stirnseite 34 einen kegelförmigen Vorsprung 56 auf, der eine Vertiefung 58 in Form eines abgesetzten Kegels aufweist, wobei sich die Formen des Vorsprungs 56 und der Vertiefung 58 entsprechen.

Zum Verbinden werden das Sensorelement 22 und der Sensorköper 20 so aufeinander angeordnet, dass sich die Zylinderachsen 26 und 42 derart überlappen, dass sie eine gemeinsame Achse bilden und sich die Zuführkanäle 28 und 38 durchgängig von der Öffnung 32 bis zu der Messbrücke 40 erstrecken. Ferner weisen die Stirnseiten 34 und 44 im Bereich der Schweißbadsicherung 54 und der Vertiefung 58 den gleichen Außendurchmesser auf. Insbesondere sind die Schweißbadsicherung 54 und die Vertiefung 58 derart ausgebildet, dass in einem radial inneren Bereich der Stirnseiten 44 und 34 um die Zylinderachsen 26 und 42 ein kleiner Spalt 60 gebildet ist und sich die Schweißbadsicherung 54 und die Vertiefung 58 in einem radial äußeren Bereich berühren oder dicht aufeinander liegen. Das Sensorelement 22 wird auf den Sensorkörper 20 im Bereich der Schweißbadsicherung 54 an den Stirnseiten 34 und 44 aufgeschweißt. Eine derartige Schweißverbindung 62 ist in den Figuren 3A und 3B durch eine Kreuzschraffur angedeutet. Die Schweißverbindung 62 wird dabei umlaufend um die Zylinderachsen 26 und 42 vorgesehen, d.h. die Schweißverbindung erstreckt sich vollständig in Umfangsrichtung um die Zylinderachsen 26 und 42 zwischen dem Sensorelement 22 und dem Sensorkörper 20. Die Schweißverbindung wird durch entsprechendes Wählen der Schweißtiefe allerdings nur in dem radial äußeren Bereich um die Zylinderachsen 26 und 38 vorgesehen, so dass der Spalt 60 auch noch nach dem Schweißen existiert. Dadurch, dass die Schweißverbindung 62 nicht über die vollständige radiale Erstreckung der Stirnseiten 34 und 44 im Bereich der Schweißbadsicherung 54 erfolgt, wird verhindert, dass die beim Schweißen entstehende Schmelze in die Zuführkanäle 28 und 38 gelangen kann, obgleich geringfügige Mengen an Schmelze in den Spalt 60 eindringen können. Der Sensorkörper 20 ist ferner so gestaltet, dass er im Bereich der Schweißverbindung 62 steifer als das Sensorelement 22 ist. Dies kann beispielsweise über eine geeignete Materialauswahl erfolgen. So kann beispielsweise das Sensorelement 22 ein keramisches Sensorelement sein, das eine metallisierte Oberfläche im Bereich der Schweißbadsicherung 54 aufweist, wohingegen der Sensorkörper 20 vollständig aus Metall oder Stahl sein kann. Da der Druck des Mediums in den Zuführkanälen 28 und 38 allseitig gegen die Wände drückt, verformt sich das Sensorelement 22 aufgrund seiner im Vergleich zu dem Sensorkörper 20 geringeren Steifigkeit stärker. Eine stabilere bzw. festere Verbindung zwischen dem Sensorkörper 20 und dem Sensorelement 22 kann erreicht werden, wenn das Sensorelement 22 vollständig aus einem metallischen Material oder Stahl ist. Auch hier kann durch entsprechende Wahl des metallischen Materials bzw. des Stahls und deren Zusammensetzungen erreicht werden, dass der Sensorkörper 20 so gestaltet wird, dass er im Bereich der Schweißverbindung 62 steifer als das Sensorelement 22 ist. Daher wird das Sensorelement 22 bei Druckbeaufschlagung im Bereich des Spalts 60 gegen den Sensorkörper 20 gedrückt und/oder kann sich daran abstützen, wodurch Spannungen in der Schweißverbindung 62 reduziert werden können.

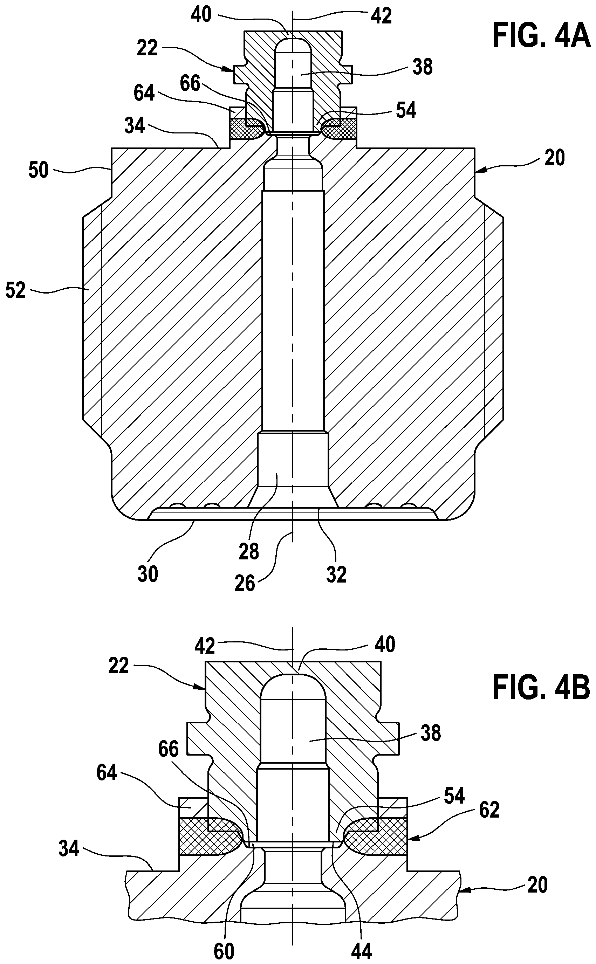

In den Figuren 4A und 4B ist eine zweite Ausführungsform eines erfindungsgemäßen Sensors gezeigt, welche anstelle der bekannten Sensoren in den Figuren 1 bis 2B eingesetzt werden können. Nachstehend werden die Unterschiede zu der ersten Ausführungsform beschrieben und gleiche Bauteile sind mit gleichen Bezugszeichen versehen. Insbesondere zeigt die Figur 4A den Sensorkörper 20 und das Sensorelement 22 in zu dem Druckstutzen 18 zu verbindenden Zustand, d.h. vor dem Schweißen, und die Figur 4B zeigt einen vergrößerten Ausschnitt desjenigen Bereichs der Schnittansicht der Figur 4A, in dem der Sensorkörper 20 und das Sensorelement 22 verbunden werden.

Bei der zweiten Ausführungsform eines erfindungsgemäßen Sensors 10 befindet sich an der dem Sensorkörper 20 zugewandten Stirnseite 44 des Sensorelements 22 die gleiche Schweißbadsicherung 54 wie bei der ersten Ausführungsform. Der Sensorkörper 20 weist an der Stirnseite 34 einen zylindrischen Vorsprung 64 auf, der eine Vertiefung 66 in Form eines abgesetzten Kegels aufweist. Der zylindrische Vorsprung 64 weist einen größeren Außendurchmesser als die Schweißbadsicherung 54 auf. Dadurch kann die Schweißbadsicherung 54 vollständig in der entsprechend ausgebildeten Vertiefung 66 des Sensorkörpers 20 aufgenommen werden. Entsprechend ist der Vorsprung 64 koaxial zu der Schweißbadsicherung 54 angeordnet und das Sensorelement 22 über seinen gesamten Durchmesser in dem Sensorkörper 20 angeordnet. Insbesondere sind die Schweißbadsicherung 54 und die Vertiefung 66 derart ausgebildet, dass in einem radial inneren Bereich der Stirnseiten 44 und 34 um die Zylinderachsen 26 und 42 ein kleiner Spalt 60 gebildet ist.

Die Schweißverbindung 62 zwischen dem Sensorelement 22 und dem Sensorkörper 20, die mit einer Kreuzschraffur angedeutet ist, erfolgt derart im Bereich der Schweißbadsicherung 54 und der Vertiefung 66, dass sich in einem radial inneren Bereich von den Zylinderachsen 26 und 42 ausgehend noch ein kleiner Spalt 60 zwischen dem Sensorelement 22 und dem Sensorkörper 20 befindet. Als radial innerer Bereich wird dabei ein Umfangsbereich des Sensorelements 22 oder des Sensorkörpers 20 verstanden, der sich in der Nähe der Zylinderachsen 26 und 42 befindet. Die Schweißverbindung 62 wird dabei umlaufend um die Zylinderachsen 26 und 42 vorgesehen, d.h. die Schweißverbindung erstreckt sich vollständig in Umfangsrichtung um die Zylinderachsen 26 und 42 zwischen dem Sensorelement 22 und dem Sensorkörper 20. Die Schweißverbindung 62 wird durch entsprechendes Wählen der Schweißtiefe allerdings nur in einem radial äußeren Bereich um die Zylinderachsen 26 und 38 vorgesehen, so dass der Spalt 60 auch noch nach dem Schweißen existiert. Daher fließt beim Schweißen keine Schmelze in die Zuführkanäle 28 und 38, obgleich geringfügige Mengen an Schmelze in den Spalt 60 eindringen können. Ferner bewirkt der nach dem Schweißen vorgesehene kleine Spalt 60 im radial inneren Bereich zwischen dem Sensorelement 22 und dem Sensorkörper 20, dass das Sensorelement 22 bei Druckbeaufschlagung durch das fluide Medium gegen den Sensorkörper 20 gedrückt wird und/oder sich daran abstützt, wodurch die Spannungen in der Schweißverbindung 62 reduziert werden. Bei der zweiten Ausführungsform kann im Vergleich zu der ersten Ausführungsform die Wandstärke des Sensorkörpers 20 um den Zuführkanal 28 im Bereich der Schweißverbindung 62 vergrößert werden. Dadurch verringert sich die Belastung in diesem Bereich.

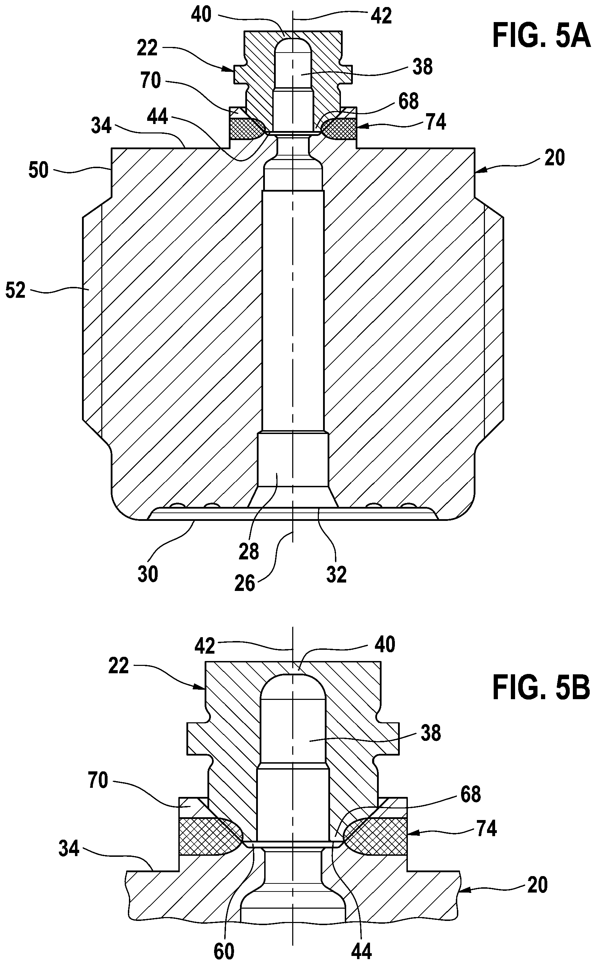

In den Figuren 5A und 5B ist eine dritte Ausführungsform eines erfindungsgemäßen Sensors gezeigt, welche anstelle der bekannten Sensoren in den Figuren 1 bis 2B eingesetzt werden können. Nachstehend werden die Unterschiede zu der ersten und zweiten Ausführungsform beschrieben und gleiche Bauteile sind mit gleichen Bezugszeichen versehen. Insbesondere zeigt die Figur 5A den Sensorkörper 20 und das Sensorelement 22 in einem Zustand, in dem diese zu dem Druckstutzen 18 verbunden werden, d.h. vor dem Schweißen, und die Figur 5B zeigt einen vergrößerten Ausschnitt desjenigen Bereichs der Schnittansicht der Figur 5A, in dem der Sensorkörper 20 und das Sensorelement 22 verbunden werden.

Das Sensorelement 22 weist an der Stirnseite 44 eine Schweißbadsicherung 68 auf, die als drehkegelförmiger Vorsprung ausgebildet ist. Der Sensorkörpers 20 weist an der Stirnseite 34 einen zylindrischen Vorsprung 70 auf, der eine Vertiefung 72 in Form eines Drehkegels aufweist. Der zylindrische Vorsprung 70 weist einen größeren Durchmesser als die Schweißbadsicherung 68 auf. Dadurch kann die Schweißbadsicherung 68 vollständig in der entsprechend ausgebildeten Vertiefung 72 des Sensorkörpers 20 vollständig aufgenommen werden. Entsprechend ist der Vorsprung 70 koaxial um die Schweißbadsicherung 68 angeordnet und das Sensorelement 22 über seinen gesamten Durchmesser in dem Sensorkörper 20 angeordnet. Insbesondere sind die Schweißbadsicherung 68 und die Vertiefung 72 derart ausgebildet, dass in einem radial inneren Bereich der Stirnseiten 44 und 34 um die Zylinderachsen 26 und 42 ein kleiner Spalt 60 gebildet ist.

Die Schweißverbindung 74 zwischen dem Sensorelement 22 und dem Sensorkörper 20, die mit einer Kreuzschraffur angedeutet ist, erfolgt derart im Bereich der Schweißbadsicherung 68 und der Vertiefung 72, dass sich in einem radial inneren Bereich von den Zylinderachsen 26 und 42 ausgehend noch ein kleiner Spalt 60 zwischen dem Sensorelement 22 und dem Sensorkörper 20 befindet. Als radial innerer Bereich wird dabei ein Bereich des Sensorelements 22 oder des Sensorkörpers 20 verstanden, der sich in der Nähe der Zylinderachsen 26 und 42 befindet. Die Schweißverbindung 74 wird dabei umlaufend um die Zylinderachsen 26 und 42 vorgesehen, d.h. die Schweißverbindung erstreckt sich vollständig in Umfangsrichtung um die Zylinderachsen 26 und 42 zwischen dem Sensorelement 22 und dem Sensorkörper 20. Die Schweißverbindung 74 wird durch entsprechendes Wählen der Schweißtiefe allerdings nur in einem radial äußeren Bereich um die Zylinderachsen 26 und 38 vorgesehen, so dass der Spalt 60 auch noch nach dem Schweißen existiert. Daher fließt beim Schweißen keine Schmelze in die Zuführkanäle 28 und 38, obgleich geringfügige Mengen an Schmelze in den Spalt 60 eindringen können. Ferner bewirkt der nach dem Schweißen vorgesehene kleine Spalt 60 im radial inneren Bereich zwischen dem Sensorelement 22 und dem Sensorkörper 20, dass das Sensorelement 22 bei Druckbeaufschlagung gegen den Sensorkörper 20 gedrückt wird und/oder sich daran abstützt, wodurch die Spannungen in der Schweißverbindung 74 reduziert werden. Bei der dritten Ausführungsform kann im Vergleich zu der ersten Ausführungsform die Wandstärke des Sensorkörpers 20 im Bereich der Schweißverbindung 62 vergrößert werden. Dadurch verringert sich die Belastung in diesem Bereich.

Es wird explizit betont, dass bei allen drei beschriebenen Ausführungsformen der Erfindung die Bildung des Spalts zwischen dem Sensorelement 22 und dem Sensorkörper 20 auch durch eine entsprechende Wahl des Öffnungswinkels der kegelförmigen oder abgesetzt kegelförmigen Schweißbadsicherung und Vertiefung erreicht werden kann. Sofern beispielsweise der Öffnungswinkel der kegelförmigen oder abgesetzt kegelförmigen Schweißbadsicherung größer als der Öffnungswinkel der kegelförmigen oder abgesetzt kegelförmigen Vertiefung ist, so kann das Sensorelement 22 nicht so tief in der Vertiefung des Sensorkörpers angeordnet werden. Dadurch berühren sich das Sensorelement 22 und der Sensorkörper nur in einem radial äußeren Bereich der Schweißbadsicherung und der Vertiefung.

Es sind jedoch noch weitere bautechnische Alternativen oder geometrische Modifikationen der Schweißbadsicherung und der Vertiefung möglich oder denkbar. So kann die Schweißbadsicherung und die Vertiefung auch aus übereinander angeordneten, zylindrischen Stufen ausgebildet werden.

## Patentansprüche

1. Verfahren zum Herstellen eines Sensors (10) zum Erfassen mindestens einer Eigenschaft eines fluiden Mediums, insbesondere eines Drucks, umfassend die Schritte:
Bereitstellen eines Sensorkörpers (20), wobei der Sensorkörper (20) zum Einbringen in eine Wand eines Messraums eingerichtet ist,
Bereitstellen mindestens eines Sensorelements (22),
Verschweißen des Sensorelements (22) mit dem Sensorkörper (20),
wobei an dem Sensorelement (22) eine Schweißbadsicherung (54; 66) vorgesehen wird,
**dadurch gekennzeichnet, dass**
die Schweißbadsicherung (54; 66) an dem Sensorelement (22) derart ausgebildet ist, dass sich vor und nach dem Verschweißen mit dem Sensorkörper (20) zwischen dem Sensorelement (22) und dem Sensorkörper (20) ein Spalt (60) befindet.

2. Verfahren nach dem vorhergehenden Anspruch, wobei das Sensorelement (22) eine Stirnseite (44) aufweist, die dem Sensorkörper (20) zugewandt ist, und die Schweißbadsicherung (54; 66) als von der Stirnseite (44) vorstehender Vorsprung ausgebildet ist.

3. Verfahren nach dem vorhergehenden Anspruch, wobei der Sensorkörper (20) eine dem Vorsprung entsprechende Vertiefung (58; 66; 72) aufweist.

4. Verfahren nach Anspruch 2 oder 3, wobei der Vorsprung kegelförmig, als abgesetzter Kegel oder mit zylindrischen Stufen ausgebildet ist.

5. Verfahren nach dem vorhergehenden Anspruch, wobei das Sensorelement (22) und der Sensorkörper (20) derart angeordnet werden, dass sie eine gemeinsame Achse aufweisen, und die Schweißbadsicherung (54; 66) derart ausgebildet ist, dass sich nach dem Verschweißen mit dem Sensorkörper (20) zwischen dem Sensorelement (22) und dem Sensorkörper (20) der Spalt (60) in einem radial inneren Bereich um die Achse befindet.

6. Verfahren nach einem der vorhergehenden Ansprüche, wobei der Sensorkörper (20) einen Zuführkanal (28) für das fluide Medium aufweist, der sich entlang einer gemeinsamen Achse des Sensorkörpers (20) und des Sensorelements (22) erstreckt, wobei das Sensorelement (22) eine Messbrücke (40) aufweist, die zum Abschließen des Zuführkanals (28) eingerichtet ist.

7. Verfahren nach einem der vorhergehenden Ansprüche, wobei das Verschweißen in einer Umfangsrichtung um das Sensorelement (22) und den Sensorkörper (20) erfolgt.

8. Verfahren nach einem der vorhergehenden Ansprüche, wobei das Sensorelement (22) und der Sensorkörper (20) im Wesentlichen zylindrisch ausgebildet sind und die Schweißbadsicherung (54; 66) derart ausgebildet ist, dass sie vollständig in dem Sensorkörper (20) angeordnet wird.

9. Sensor zum Erfassen mindestens einer Eigenschaft eines fluiden Mediums, insbesondere eines Drucks mit einem Sensorkörper (20), wobei der Sensorkörper zum Einbringen in eine Wand eines Messraums eingerichtet ist, und mit mindestens einem Sensorelement (22), wobei an dem Sensorelement (22) eine Schweißbadsicherung (54; 66) vorgesehen wird, wobei das Sensorelements (22) mit dem Sensorkörper (20) verschweißt ist,
**dadurch gekennzeichnet, dass**
die Schweißbadsicherung (54; 66) an dem Sensorelement (22) derart ausgebildet ist, dass sich zwischen dem Sensorelement (22) und dem Sensorkörper (20) ein Spalt (60) befindet.

10. Sensor nach Anspruch 9, **dadurch gekennzeichnet, dass** das Sensorelement (22) und der Sensorkörper (20) derart angeordnet sind, dass sie eine gemeinsame Achse aufweisen, und die Schweißbadsicherung (54; 66) derart ausgebildet ist, dass sich der Spalt (60) in einem radial inneren Bereich um die Achse befindet.

11. Sensor Anspruch 9 oder 10, **dadurch gekennzeichnet, dass** das Sensorelement (22) eine Stirnseite (44) aufweist, die dem Sensorkörper (20) zugewandt ist, und die Schweißbadsicherung (54; 66) als von der Stirnseite (44) vorstehender Vorsprung ausgebildet ist.

12. Sensor nach einem der Ansprüche 9 bis 11, **dadurch gekennzeichnet, dass** der Sensorkörper (20) eine dem Vorsprung entsprechende Vertiefung (58; 66; 72) aufweist.

13. Sensor nach einem der Ansprüche 9 bis 12, **dadurch gekennzeichnet, dass** der Vorsprung kegelförmig, als abgesetzter Kegel oder mit zylindrischen Stufen ausgebildet ist.

14. Sensor nach einem der Ansprüche 9 bis 13, **dadurch gekennzeichnet, dass** der Sensorkörper (20) einen Zuführkanal (28) für das fluide Medium aufweist, der sich entlang einer gemeinsamen Achse des Sensorkörpers (20) und des Sensorelements (22) erstreckt, wobei das Sensorelement (22) eine Messbrücke (40) aufweist, die zum Abschließen des Zuführkanals (28) eingerichtet ist.

15. Sensor nach einem der Ansprüche 9 bis 13, **dadurch gekennzeichnet, dass** das Sensorelement (22) und der Sensorkörper (20) im Wesentlichen zylindrisch ausgebildet sind und die Schweißbadsicherung (54; 66) derart ausgebildet ist, dass sie vollständig in dem Sensorkörper (20) angeordnet ist.

## Claims

1. Method for producing a sensor (10) for detecting at least one property of a fluid medium, in particular a pressure, comprising the steps:
providing a sensor body (20), the sensor body (20) being configured for introduction into a wall of a measuring chamber,
providing at least one sensor element (22),
welding the sensor element (22) to the sensor body (20),
a weld pool backing (54; 66) being provided on the sensor element (22),
**characterized in that**
the weld pool backing (54; 66) is formed on the sensor element (22) in such a way that there is a gap (60) between the sensor element (22) and the sensor body (20) before and after the welding to the sensor body (20).

2. Method according to the preceding claim, wherein the sensor element (22) has a front side (44) which faces the sensor body (20), and the weld pool backing (54; 66) is formed as a protrusion projecting from the front side (44).

3. Method according to the preceding claim, wherein the sensor body (20) has a recess (58; 66; 72) corresponding to the protrusion.

4. Method according to Claim 2 or 3, wherein the protrusion is formed conically, as a stepped cone or with cylindrical steps.

5. Method according to the preceding claim, wherein the sensor element (22) and the sensor body (20) are arranged in such a way that they have a common axis, and the weld pool backing (54; 66) is formed in such a way that, after the welding to the sensor body (20), the gap (60) between the sensor element (22) and the sensor body (20) is located in a radially inner region around the axis.

6. Method according to one of the preceding claims, wherein the sensor body (20) has a feed channel (28) for the fluid medium, which extends along a common axis of the sensor body (20) and the sensor element (22), wherein the sensor element (22) has a measuring bridge (40) which is configured to terminate the feed channel (28).

7. Method according to one of the preceding claims, wherein the welding is carried out in a circumferential direction around the sensor element (22) and the sensor body (20).

8. Method according to one of the preceding claims, wherein the sensor element (22) and the sensor body (20) are formed substantially cylindrically, and the weld pool backing (54; 66) is formed in such a way that it is arranged completely in the sensor body (20).

9. Sensor for detecting at least one property of a fluid medium, in particular a pressure, comprising a sensor body (20), the sensor body being configured for introduction into a wall of a measuring chamber, and comprising at least one sensor element (22), a weld pool backing (54; 66) being provided on the sensor element (22), the sensor element (22) being welded to the sensor body (20),
**characterized in that**
the weld pool backing (54; 66) is formed on the sensor element (22) in such a way that there is a gap (60) between the sensor element (22) and the sensor body (20).

10. Sensor according to Claim 9, **characterized in that** the sensor element (22) and the sensor body (20) are arranged in such a way that they have a common axis, and the weld pool backing (54; 66) is formed in such a way that the gap (60) is located in a radially inner region around the axis.

11. Sensor Claim 9 or 10, **characterized in that** the sensor element (22) has a front side (44) which faces the sensor body (20), and the weld pool backing (54; 66) is formed as a protrusion projecting from the front side (44).

12. Sensor according to one of Claims 9 to 11,
**characterized in that** the sensor body (20) has a recess (58; 66; 72) corresponding to the protrusion.

13. Sensor according to one of Claims 9 to 12,
**characterized in that** the protrusion is formed conically, as a stepped cone or with cylindrical steps.

14. Sensor according to one of Claims 9 to 13,
**characterized in that** the sensor body (20) has a feed channel (28) for the fluid medium, which extends along a common axis of the sensor body (20) and the sensor element (22), wherein the sensor element (22) has a measuring bridge (40) which is configured to terminate the feed channel (28) .

15. Sensor according to one of Claims 9 to 13,
**characterized in that** the sensor element (22) and the sensor body (20) are formed substantially cylindrically, and the weld pool backing (54; 66) is formed in such a way that it is arranged completely in the sensor body (20).

## Revendications

1. Procédé de fabrication d'un capteur (10) destiné à détecter au moins une propriété d'un milieu fluide, notamment une pression, comprenant les étapes suivantes :
fourniture d'un corps de capteur (20), le corps de capteur (20) étant conçu pour être introduit dans une paroi d'une chambre de mesure,
fourniture d'au moins un élément capteur (22),
soudage de l'élément capteur (22) avec le corps de capteur (20),
un renfort de soudage (54 ; 66) étant présent sur l'élément capteur (22),
**caractérisé en ce que**
le renfort de soudage (54 ; 66) sur l'élément capteur (22) est configuré de telle sorte qu'une fente (60) se trouve entre l'élément capteur (22) et le corps de capteur (20) avant et après le soudage avec le corps de capteur (20).

2. Procédé selon la revendication précédente, l'élément capteur (22) possédant un côté frontal (44) qui fait face au corps de capteur (20) et le renfort de soudage (54 ; 66) est réalisé sous la forme d'une saillie qui dépasse depuis le côté frontal (44).

3. Procédé selon la revendication précédente, le corps de capteur (20) possédant une cavité (58 ; 66 ; 72) qui correspond à la saillie.

4. Procédé selon la revendication 2 ou 3, la saillie étant réalisée en forme de cône, sous la forme d'un cône tronqué ou avec des gradins cylindriques.

5. Procédé selon la revendication précédente, l'élément capteur (22) et le corps de capteur (20) étant disposés de telle sorte qu'ils possèdent un axe commun, et le renfort de soudage (54 ; 66) étant configuré de telle sorte qu'après le soudage avec le corps de capteur (20), la fente (60) entre l'élément capteur (22) et le corps de capteur (20) se trouve dans une zone intérieure dans le sens radial autour de l'axe.

6. Procédé selon l'une des revendications précédentes, le corps de capteur (20) possédant un canal d'arrivée (28) pour le milieu fluide, lequel s'étend le long d'un axe commun du corps de capteur (20) et de l'élément capteur (22), l'élément capteur (22) possédant un pont de mesure (40) qui est conçu pour la fermeture du canal d'arrivée (28).

7. Procédé selon l'une des revendications précédentes, le soudage s'effectuant dans une direction circonférentielle autour de l'élément capteur (22) et du corps de capteur (20).

8. Procédé selon l'une des revendications précédentes, l'élément capteur (22) et le corps de capteur (20) étant de configuration sensiblement cylindrique et le renfort de soudage (54 ; 66) étant configuré de telle sorte qu'il est entièrement disposé dans le corps de capteur (20).

9. Capteur destiné à détecter au moins une propriété d'un milieu fluide, notamment une pression, comprenant un corps de capteur (20), le corps de capteur étant conçu pour être introduit dans une paroi d'une chambre de mesure, et comprenant au moins un élément capteur (22), un renfort de soudage (54 ; 66) étant présent sur l'élément capteur (22), l'élément capteur (22) étant soudé avec le corps de capteur (20),
**caractérisé en ce que**
le renfort de soudage (54 ; 66) sur l'élément capteur (22) est configuré de telle sorte qu'une fente (60) se trouve entre l'élément capteur (22) et le corps de capteur (20).

10. Capteur selon la revendication 9, **caractérisé en ce que** l'élément capteur (22) et le corps de capteur (20) sont disposés de telle sorte qu'ils possèdent un axe commun, et le renfort de soudage (54 ; 66) est configuré de telle sorte que la fente (60) se trouve dans une zone intérieure dans le sens radial autour de l'axe.

11. Capteur la revendication 9 ou 10, **caractérisé en ce que** l'élément capteur (22) possède un côté frontal (44) qui fait face au corps de capteur (20) et le renfort de soudage (54 ; 66) est réalisé sous la forme d'une saillie qui dépasse depuis le côté frontal (44).

12. Capteur selon l'une des revendications 9 à 11,
**caractérisé en ce que** le corps de capteur (20) possède une cavité (58 ; 66 ; 72) qui correspond à la saillie.

13. Capteur selon l'une des revendications 9 à 12,
**caractérisé en ce que** la saillie est réalisée en forme de cône, sous la forme d'un cône tronqué ou avec des gradins cylindriques.

14. Capteur selon l'une des revendications 9 à 13,
**caractérisé en ce que** le corps de capteur (20) possède un canal d'arrivée (28) pour le milieu fluide, lequel s'étend le long d'un axe commun du corps de capteur (20) et de l'élément capteur (22), l'élément capteur (22) possédant un pont de mesure (40) qui est conçu pour la fermeture du canal d'arrivée (28).

15. Capteur selon l'une des revendications 9 à 13,
**caractérisé en ce que** l'élément capteur (22) et le corps de capteur (20) sont de configuration sensiblement cylindrique et le renfort de soudage (54 ; 66) est configuré de telle sorte qu'il est entièrement disposé dans le corps de capteur (20).
